# EUROPEAN PATENT APPLICATION

(11) **EP 4 674 578 A1**
(43) Date of publication of application: **07.01.2026**
(21) Application number: 24792738.7
(22) Date of filing: 18.04.2024
(51) Int. Cl.: B25J 9/22, B25J 13/00

(54) **ROBOT SYSTEM, ROBOT CONTROL METHOD, ROBOT CONTROL PROGRAM, AND PROGRAM GENERATION SYSTEM**

(30) Priority: 20.04.2023 US 202363497207 P
(71) Applicant: Kabushiki Kaisha Yaskawa Denki, Kitakyushu-shi, Fukuoka 806-0004 (JP)
(72) Inventor: SOKABE Koji, Kitakyushu-shi, Fukuoka 806-0004 (JP); KUMAGAI Hiroshi, Kitakyushu-shi, Fukuoka 806-0004 (JP); YOKOYA Tsuyoshi, Kitakyushu-shi, Fukuoka 806-0004 (JP); KITTAKA Tatsuya, Kitakyushu-shi, Fukuoka 806-0004 (JP); MURAOKA Jiro, Kitakyushu-shi, Fukuoka 806-0004 (JP)
(74) Representative: Grünecker Patent- und Rechtsanwälte PartG mbB
(86) International application number: PCT/JP2024/015425
(87) International publication number: WO 2024/219466

(57) **Abstract**

A robot system comprises: a reception unit configured to receive input sequence data representing an operation of a robot placed in a real space; a conversion unit configured to input the input sequence data into a conversion language model generated by machine learning to convert the input sequence data into output sequence data; and a robot control unit configured to control the robot to perform the operation, based on the output sequence data.

## Description

### Technical Field

One aspect of the present disclosure relates to a robot system, a robot control method, a robot control program, and a program generation system.

### Background Art

Techniques for operating a robot using machine learning are known. For example, Patent Literature 1 discloses a machine learning apparatus including: a machine learning unit that performs machine learning and outputs a control command; a simulator that executes simulation of a work operation of a machine (robot) based on the control command; and a first determination unit that determines the control command based on the result of the simulation executed by the simulator.

Regarding machine learning, Patent Literature 2 discloses a technique for converting a sequence using a neural network. Patent Literature 3 discloses a machine learning model configured to include information from a grounding source in computer-generated text and to pay attention to the computer-generated text based on a control signal.

### Citation List

### Patent Literature

[Patent Literature 1] Japanese Patent No. 6457421
[Patent Literature 2] Japanese Patent No. 6884871
[Patent Literature 3] United States Patent Application Publication No. 2021/0192140

### Summary of Invention

### Technical Problem

There is a demand for a mechanism that enables a robot to operate with simpler instructions than conventional methods.

### Solution to Problem

A robot system according to one aspect of the present disclosure includes: a reception unit configured to receive input sequence data representing an operation of a robot placed in a real space; a conversion unit configured to input the input sequence data into a conversion language model generated by machine learning to convert the input sequence data into output sequence data; and a robot control unit configured to control the robot to perform the operation, based on the output sequence data.

### Advantageous Effects of Invention

According to one aspect of the present disclosure, a robot may be operated with simpler instructions than conventional methods.

### Brief Description of Drawings

FIG. 1 is a diagram showing an example of use of a robot system.
FIG. 2 is a diagram showing an example overall configuration of the robot system.
FIG. 3 is a diagram showing an example functional configuration of the robot system.
FIG. 4 is a diagram showing an example hardware configuration of a computer used for the robot system.
FIG. 5 is a flowchart showing an example of a robot control method.
FIG. 6 is a diagram showing an example behavior tree.
FIG. 7 is a diagram showing an example of programming code implementing the behavior tree.

### Description of Embodiments

Various examples of the present disclosure will be described in detail below with reference to the attached drawings. In the description of the drawings, the same reference signs are assigned to the same or equivalent elements, and redundant descriptions are omitted.

### [Overview of system]

The robot system according to the present disclosure is a mechanism for operating a robot placed in a real space with simple instructions. The robot system controls the robot using a language model generated by machine learning. The machine learning refers to a technique for autonomously finding patterns or rules by iterative learning based on given information. The language model refers to a technology that processes input sequence data and generates output sequence data indicating predictions, responses, and the like. The language model is a type of generative AI and is constructed, for example, using a neural network. Examples of language models include large language models (LLMs) constructed using large datasets and deep learning and having scaled-up three elements of computation, data volume, and the number of model parameters. The sequence data refers to data indicating information arranged in a predetermined order. Examples of sequence data include natural language text, speech, programming code, and images (still image or video).

A user inputs input sequence data representing an operation of a robot placed in a real space into the robot system. The input sequence data may be represented in various formats, such as text, speech, reference programming code, or images. The robot system inputs the input sequence data into a predetermined language model to convert the input sequence data into output sequence data. This conversion may be referred to as generation of output sequence data. The robot system controls the robot to perform the operation instructed by the user, based on the output sequence data.

The robot system may input additional data into the language model in addition to the input sequence data to convert the input sequence data into the output sequence data. In one example, in a case where the robot system is unable to convert the input sequence data into the output sequence data, the robot system further receives supplementary data for supplementing the input sequence data. In another example, in a case where the operation of the robot based on the output sequence data is not executable, that is, in a case where the intended operation of the robot cannot be realized by the output sequence data, the robot system sets additional input data for modifying or correcting the output sequence data. The robot system further inputs at least one of the supplementary data and the additional input data into the language model in addition to the input sequence data, to convert the input sequence data into the output sequence data. Since both the supplementary data and the additional input data are used for generating the output sequence data, these data may be referred to as additional input sequence data.

The operation of the robot represented by the input sequence data and realized by the output sequence data may be a task performed by the robot. The user may input the input sequence data representing a plurality of tasks into the robot system, the robot system may generate the output sequence data for causing the robot to perform the plurality of tasks, and the robot may execute the plurality of tasks according to the situation.

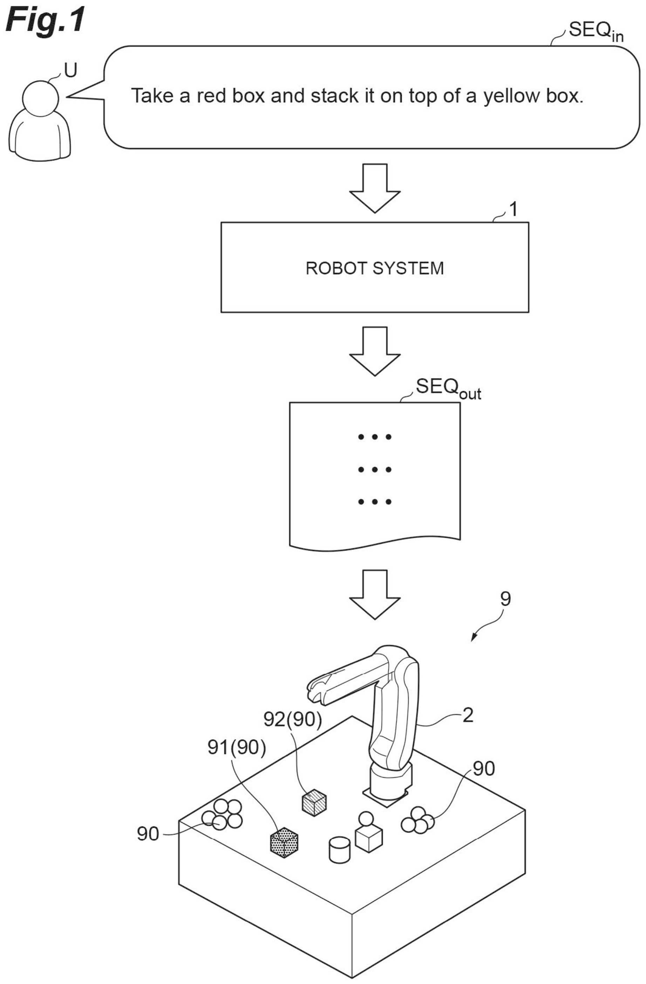

FIG. 1 shows an example of use of a robot system 1 according to one example. In this example, a user U causes a robot 2 placed in a real space 9 to process various types of workpieces 90. Suppose the user U inputs the instruction "Take a red box and stack it on top of a yellow box" as input sequence data SEQᵢₙ. The robot system 1 inputs the input sequence data SEQᵢₙ into a predetermined language model to convert the input sequence data SEQᵢₙ into output sequence data SEQₒᵤₜ represented in a form of programming code. The output sequence data SEQₒᵤₜ includes an instruction to take a red box and an instruction to place the red box on top of a yellow box. The robot system 1 controls the robot 2 based on the output sequence data SEQₒᵤₜ. The robot 2, in accordance with the control, lifts a red box 91 and stacks the red box 91 on top of a yellow box 92. As in this example, the robot system 1 enables the user U to cause the robot 2 to perform a desired task with a simple instruction represented in natural language.

### [System configuration]

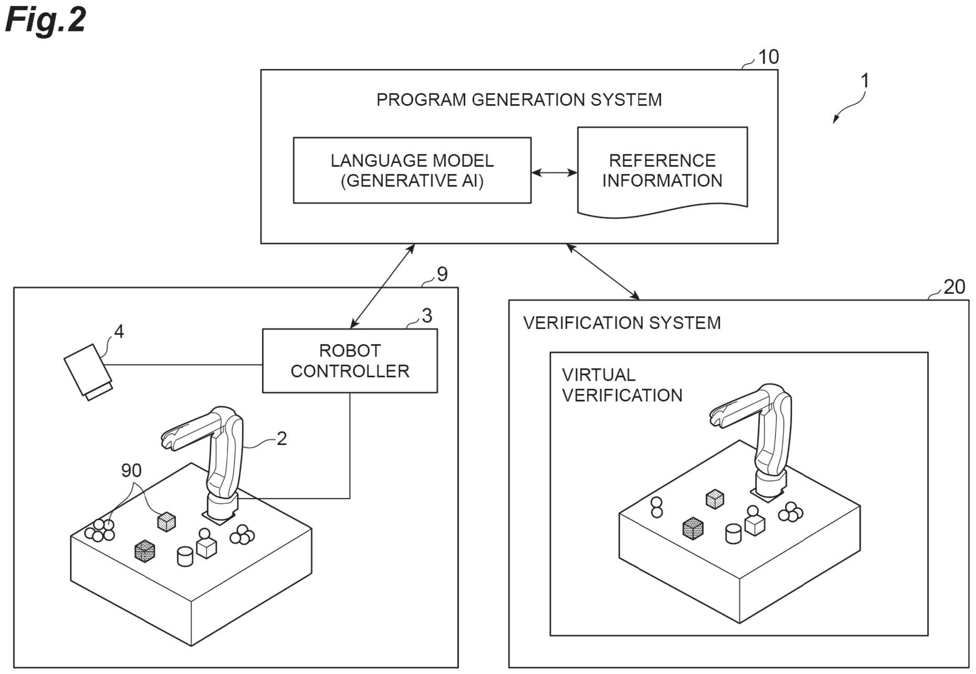

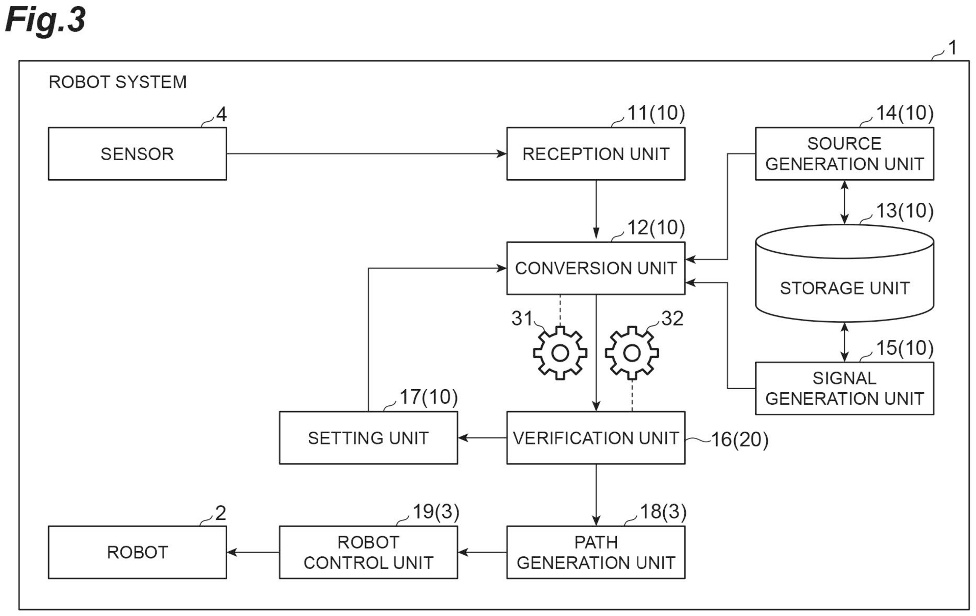

Examples of the configuration of the robot system 1 will be described with reference to FIG. 2 and FIG. 3. FIG. 2 shows an example overall configuration of the robot system 1. FIG. 3 shows an example functional configuration of the robot system 1.

As illustrated in FIG. 2, in one example, the robot system 1 includes a program generation system 10, a verification system 20, and a robot controller 3. The program generation system 10 is a computer system that converts the input sequence data representing an operation of the robot 2 into the output sequence data. In one example, the output sequence data is an operation program (robot program) for causing the robot to perform the operation represented by the input sequence data. The verification system 20 is a computer system that virtually verifies the output sequence data. The robot controller 3 is a computer system that controls the real robot 2 based on the verified output sequence data. In the real space 9, a sensor 4 is provided to detect at least a partial area in the real space 9. For example, the sensor 4 detects at least one of the robot 2 and the workpiece 90 and outputs sensor data indicating the detection result. Examples of the sensor 4 include a camera that captures a predetermined area of the real space 9 and generates image data (image information) indicating the situation in that area. The image data is an example of sensor data. The image data may be still image data or video data. Both the robot 2 and the sensor 4 may be components of the robot system 1 or may be provided outside the robot system 1.

In one example, the program generation system 10 inputs the input sequence data received from the user into the language model (generative AI) and converts the input sequence data into the output sequence data. The language model may refer to reference information such as a grounding source and a control signal for the conversion. The grounding source refers to information provided for generating the output sequence data that is consistent with reality. The control signal refers to information for controlling the conversion from the input sequence data to the output sequence data by the language model. The control signal may be information indicating constraints imposed during the conversion. Such reference information are used to appropriately operate the robot 2 placed in the real space 9 according to the actual situation in the real space 9.

The verification system 20 virtually verifies whether the operation of the robot 2 based on the generated output sequence data is executable. The verification system 20 may use, as a method of virtual verification, simulation or another language model different from the language model for generating the output sequence data. The verification system 20 feeds back the verification result to the program generation system 10. The program generation system 10 regenerates the output sequence data based on the verification result.

The robot 2 is a device that receives driving force and performs a predetermined operation according to the purpose to execute useful work. In one example, the robot 2 includes a plurality of joints, an arm, and an end effector attached to the tip of the arm. Each of the plurality of joints is provided with a joint axis. Some components of the robot 2, such as the arm and the turning part, rotate about the joint axis, and as a result, the robot 2 may change the position and orientation of the end effector within a predetermined range. In one example, the robot 2 is a multi-axis serial link type vertically articulated robot. The robot 2 may be a six-axis vertically articulated robot or a seven-axis vertically articulated robot with one redundant axis added to the six axes. The robot 2 may also be a mobile robot capable of autonomous movement, such as an Autonomous Mobile Robot (AMR) or a robot supported by an Automated Guided Vehicle (AGV). Alternatively, the robot 2 may be a stationary robot fixed at a predetermined location.

The robot controller 3 is a device that controls the robot 2 according to the output sequence data (operation program). In one example, the robot controller 3 sets a target value based on the output sequence data and the sensor data, determines a manipulated value of the robot to match the position and orientation of the end effector to the target value, and controls the robot 2 according to the manipulated value. Examples of the manipulated value include joint angles (angle of each joint) and joint torques (torque at each joint).

In the example of FIG. 3, the robot system 1 includes, as functional components, a reception unit 11, a conversion unit 12, a storage unit 13, a source generation unit 14, a signal generation unit 15, a verification unit 16, a setting unit 17, a path generation unit 18, and a robot control unit 19. In one example, the reception unit 11, conversion unit 12, storage unit 13, source generation unit 14, signal generation unit 15, and setting unit 17 correspond to the program generation system 10, the verification unit 16 corresponds to the verification system 20, and the path generation unit 18 and robot control unit 19 correspond to the robot controller 3. In the example of FIG. 3, the robot system 1 includes the robot 2 and the sensor 4.

The reception unit 11 is a functional module that receives various data input by the user as input data. The reception unit 11 receives the input sequence data representing an operation of the robot 2. As described above, the input sequence data may represent one or more tasks. The reception unit 11 may further receive the supplementary data.

The conversion unit 12 is a functional module that inputs the input sequence data into a conversion language model 31 generated by machine learning to convert the input sequence data into the output sequence data. The conversion language model 31 is a language model that generates the output sequence data based on the input sequence data. For example, the conversion language model 31 may be obtained by performing fine-tuning on a pre-trained large language model such as ChatGPT (GPT-4). The fine-tuning refers to a technique for retraining a trained model using an additional dataset to finely adjust the parameters of the trained model such that desired predictions or responses are obtained. For example, the conversion language model 31 may be generated in advance by fine-tuning using an additional dataset related to control of the robot 2. The conversion language model 31 may be generated in a computer system separate from the robot system 1 and ported to the robot system 1, or may be generated within the robot system 1 (for example, in a training unit).

The storage unit 13 is a functional module that stores various information used for converting the input sequence data into the output sequence data. The storage unit 13 may store reference information (a grounding source and a control signal) actually referred to for the conversion, or may store original information used for generating the reference information.

The storage unit 13 may store a plurality of skills as the grounding source or as the original information for the grounding source. The skill refers to an element constituting the operation of the robot 2 and may be an element constituting a task. The skill may be regarded as the minimum unit of operation of the robot 2. The operation of the robot 2 is generated by one or more skills. Examples of skills include "move the tip (end effector) of the robot to coordinates indicated by arguments," "search for an object of a color specified by arguments," "check an object of a color specified by arguments," "open the hand (end effector)," and "close the hand (end effector)." Each skill may be stored in the storage unit 13 in a format of sample programming code.

The storage unit 13 may store robot information regarding the robot as a control signal or as original information for a control signal. The robot information includes at least one of specifications of the robot 2 indicating operation limitations and peripheral device information regarding peripheral devices such as end effectors and sensors. The storage unit 13 may store at least one of programming constraints and environmental information. The programming constraints may include at least one of a programming language and a library. Alternatively, the programming constraints may include constraints in actual coding, such as constraints regarding air-cut paths, constraints regarding the execution order of skills, and priority constraints in the output sequence data. The priority constraints may be, for example, which of shortening execution time, suppressing vibration, reducing operating noise, smooth operation of the robot, and reliability of operation is most prioritized. The environmental information may include at least one of the position of the robot 2 in the real space 9 and the physical range where the workpiece 90 is placed.

The source generation unit 14 is a functional module that generates the grounding source. The source generation unit 14 may store the generated grounding source in the storage unit 13 or provide the grounding source to the conversion unit 12 (conversion language model 31). The source generation unit 14 may generate skills as the grounding source, and thus the source generation unit 14 may also be referred to as a skill generation unit.

In one example, the source generation unit 14 generates sample programming code for a skill based on user input indicating an overview of the skill and stores the code in the storage unit 13 as at least part of the grounding source. This storage process may be regarded as a preprocessing performed for operating the robot system 1.

The source generation unit 14 may generate the grounding source based on a plurality of skills stored in the storage unit 13 and provide the grounding source to the conversion unit 12. For example, the source generation unit 14 selects one or more skills corresponding to at least one of the robot information of the robot 2, the environmental information of the real space 9, and user input, from the plurality of skills in the storage unit 13. This selection may be regarded as narrowing down skills. The source generation unit 14 generates the grounding source based on the selected one or more skills. The grounding source may be, for example, a set of programming code for the selected one or more skills, that is, a module or library.

The signal generation unit 15 is a functional module that generates the control signal. The signal generation unit 15 may store the generated control signal in the storage unit 13 or provide them to the conversion unit 12 (conversion language model 31).

In one example, the signal generation unit 15 receives user input regarding the robot information, the programming constraints, or the environmental information and stores the input information as a control signal in the storage unit 13. This storage process may be regarded as a preprocessing performed for operating the robot system 1.

As another example, the signal generation unit 15 selects one or more control signals corresponding to at least one of the robot information of the robot 2, the environmental information of the real space 9, and user input, from a plurality of control signals stored in the storage unit 13. This selection is also an example of generating control signals. The signal generation unit 15 provides the selected one or more control signals to the conversion unit 12.

The verification unit 16 is a functional module that verifies whether the operation of the robot 2 based on the generated output sequence data is executable. The verification unit 16 predicts the operation of the robot 2 on a computer rather than actually operating the robot 2 and verifies the possibility of the operation. The verification unit 16 may perform the verification by simulation. Alternatively, the verification unit 16 may input the output sequence data into a verification language model 32 generated by another machine learning and different from the conversion language model 31, to perform the verification. The verification language model 32 is a language model that verifies the validity of the output sequence data. The verification language model 32 generates a determination result regarding the possibility of the robot operation based on the output sequence data. Like the conversion language model 31, the verification language model 32 may be obtained by performing fine-tuning on a pre-trained large language model such as ChatGPT (GPT-4). For example, the verification language model 32 may be generated in advance by fine-tuning using an additional dataset indicating the correspondence between instruction sets for the robot 2 and the operation of the robot 2. The verification language model 32 may be generated in a computer system separate from the robot system 1 and ported to the robot system 1, or may be generated within the robot system 1 (for example, in a training unit).

The setting unit 17 is a functional module that sets additional input data in a case where the operation of the robot 2 based on the output sequence data is verified not to be executable.

The path generation unit 18 is a functional module that generates one or more air-cut paths for moving the robot 2 between the two or more skills included in the output sequence data. The air-cut path refers to a path for guiding the robot 2 that has completed a preceding skill to the next skill. The air-cut path connects the end position of the robot 2 in the preceding skill and the start position of the robot 2 in the next skill.

The robot control unit 19 is a functional module that controls the robot 2 such that the robot 2 performs the operation represented by the input sequence data, based on at least the output sequence data. In one example, the robot control unit 19 controls the robot 2 based on the output sequence data for which the operation of the robot 2 is verified to be executable. The robot control unit 19 may further control the robot 2 based on one or more air-cut paths.

The robot system 1 may be implemented by any type of computer. The computer may be a general-purpose computer such as a personal computer or a business server, or may be incorporated in a dedicated device that executes specific processing.

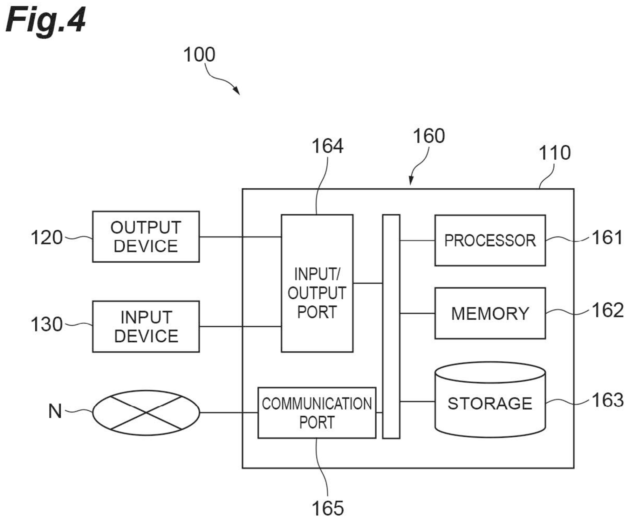

FIG. 4 illustrates an example hardware configuration of a computer 100 used for the robot system 1. In this example, the computer 100 includes a main body 110, an output device 120, and an input device 130.

The main body 110 is a device having circuitry 160. The circuitry 160 includes a processor 161, a memory 162, a storage 163, an input/output port 164, and a communication port 165. The number of each hardware component may be one or two or more. The storage 163 records a program for configuring each functional module of the main body 110. The storage 163 is a computer-readable recording medium such as a hard disk, a nonvolatile semiconductor memory, a magnetic disk, or an optical disc. The memory 162 temporarily stores a program loaded from the storage 163, calculation results by the processor 161, and the like. The processor 161 configures each functional module by executing the program in cooperation with the memory 162. The input/output port 164 inputs and outputs electrical signals to and from the output device 120 or the input device 130 in response to commands from the processor 161. The input/output port 164 may input and output electrical signals to and from other devices. The communication port 165 performs data communication with other devices via a communication network N in accordance with commands from the processor 161.

The output device 120 is a device for outputting information from the main body 110. Examples of the output device 120 include display devices such as various displays and speakers.

The input device 130 is a device for inputting information to the main body 110. Examples of the input device 130 include operation interfaces such as a keypad, a mouse, and a manipulation controller.

The output device 120 and the input device 130 may be integrated as a touch panel. For example, the main body 110, the output device 120, and the input device 130 may be integrated like a tablet computer.

Each functional module of the robot system 1 is implemented by loading a robot control program on the processor 161 or the memory 162 and executing the program in the processor 161. The robot control program includes code for implementing each functional module of the robot system 1. The processor 161 operates the input/output port 164 and the communication port 165 according to the robot control program, and executes reading and writing of data in the memory 162 or the storage 163.

The robot control program may be provided by being recorded in a non-transitory recording medium such as a CD-ROM, DVD-ROM, or semiconductor memory. Alternatively, the robot control program may be provided via a communication network as data signals superimposed on carrier waves.

As in the example of FIG. 2, the robot system 1 may be a distributed system including two or more computer systems or devices. In this case, a computer 100 is introduced into each computer system or device. A corresponding module of the robot control program is applied to each computer 100, and as a result, the entire robot system 1 is realized.

### [Robot control method]

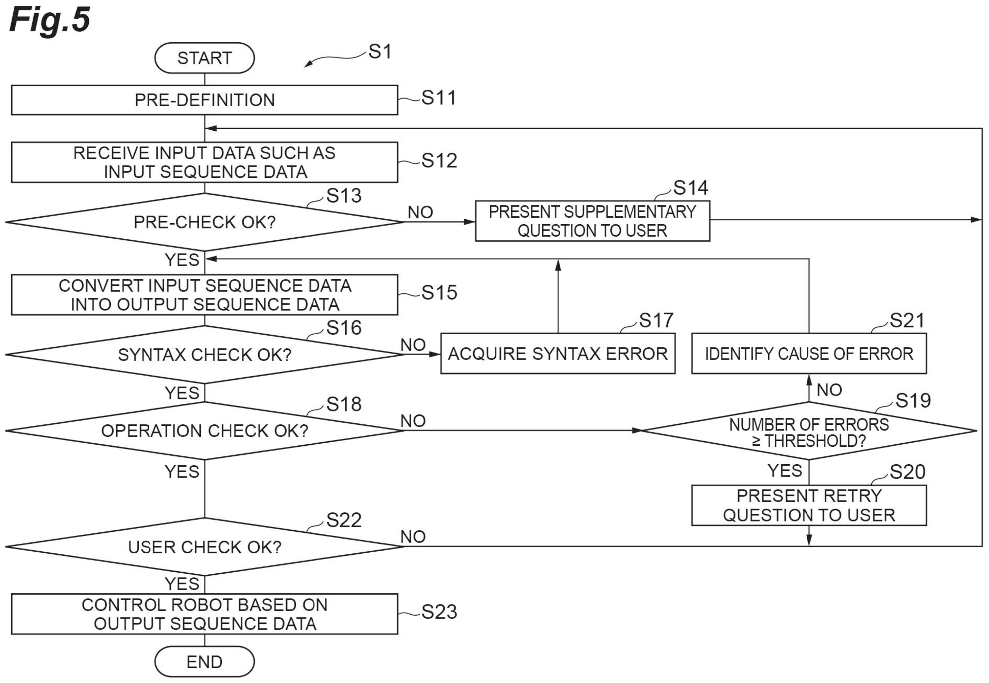

An example of the robot control method according to the present disclosure will be described with reference to FIG. 5. FIG. 5 illustrates an example of the robot control method as a processing flow S1. That is, the robot system 1 executes the processing flow S1.

In step S11, at least one of the source generation unit 14 and the signal generation unit 15 performs a pre-definition. The pre-definition may be regarded as a process for setting conditions for generating the output sequence data in advance. For example, the source generation unit 14 generates the grounding source corresponding to the robot 2 in the real space 9 based on a plurality of skills in the storage unit 13. The signal generation unit 15 refers to the control signals in the storage unit 13 based on user input to generate the control signal corresponding to the robot 2 in the real space 9. By this pre-definition, the grounding source (for example, programming code for skills) and the control signal (for example, at least one of the robot information, the programming constraints, and the environmental information) are prepared for the robot 2.

In step S12, the reception unit 11 receives the input data for generating the output sequence data. The reception unit 11 receives at least the input sequence data representing an operation of the robot 2 in the real space 9.

For example, the reception unit 11 receives language information (text data) representing the operation of the robot 2 represented by a natural language, as input sequence data. The reception unit 11 may receive the language information input as a character string, or may convert speech input by the user's utterance into text by speech recognition and receive the text as the language information. The input sequence data SEQᵢₙ "Take a red box and stack it on top of a yellow box" in FIG. 1 is an example of the language information.

In addition to the language information, the reception unit 11 may receive sensor information supplementing a part of the operation of the robot 2, as input sequence data. The reception unit 11 may receive real sensor data obtained by the sensor 4 as the sensor information. For example, the reception unit 11 may receive image data (image information) obtained by capturing an operation of the robot 2 desired by the user with a camera as the sensor information. Alternatively, the reception unit 11 may receive pressure data obtained by detecting the desired degree or range of pressure in the operation of the robot 2 with a pressure sensor as sensor information. The reception unit 11 may receive virtual sensor information (virtual sensor data) set in a virtual space that virtually reproduces the real space 9. The reception unit 11 may receive current real or virtual sensor information, or may receive real or virtual sensor information at a past time stored in a predetermined storage device.

The reception unit 11 may receive multimodal data including language information and sensor information as input sequence data. The multimodal data refers to data composed of a plurality of types of information obtained from a plurality of types of information sources. The reception unit 11 may receive multimodal data including a type of information different from both the language information and the sensor information.

In step S13, the reception unit 11 performs a pre-check on the input sequence data. This pre-check is a process for verifying whether the input sequence data is able to be converted into the output sequence data before inputting the input sequence data into the conversion language model 31. In one example, the reception unit 11 analyzes the input sequence data to identify the type of operation of the robot 2 represented by the input sequence data. The type of operation may be a type of operation or task, such as pick-and-place, painting, or welding. For example, the reception unit 11 compares at least one of the robot information, the programming constraints, and the environmental information in the storage unit 13 with the identified type of operation, and verifies whether the input sequence data includes information necessary for generating the output sequence data. In a case where the input sequence data is verified not to be convertible into the output sequence data (NO in step S13), the process proceeds to step S14. On the other hand, in a case where the input sequence data is verified to be convertible into the output sequence data (YES in step S13), the process proceeds to step S15.

In step S14, the reception unit 11 presents to the user a supplementary question, which is a question for receiving supplementary data. The reception unit 11 identifies information lacking in the input sequence data, that is, information to be included in the supplementary data, based on the result of the pre-check, and generates a supplementary question for obtaining that information from the user. The reception unit 11 may generate the supplementary question based on the identified type of operation. For example, in a case where pick-and-place is identified as the type of operation and the place to put the object is not specified in the input sequence data, the reception unit 11 may generate a supplementary question such as "Please specify where to place the object." The reception unit 11 displays the generated supplementary question on a display device.

After step S14, the process returns to step S12. In the repeated step S12, the reception unit 11 further receives user input to the presented supplementary question as supplementary data. In response to the supplementary data being received, the process proceeds to step S13. In the repeated step S13, the reception unit 11 performs the pre-check on the input data obtained so far (the set of input sequence data and supplementary data). That is, the reception unit 11 verifies whether the input sequence data is able to be converted into output sequence data, referring also to the supplementary data.

In step S15, the conversion unit 12 inputs the input sequence data verified to be convertible into the output sequence data into the conversion language model 31 to convert the input sequence data into the output sequence data. In a case where the multimodal data is received as the input sequence data, the conversion unit 12 inputs the multimodal data into the conversion language model 31 to convert the multimodal data into the output sequence data. In a case where the supplementary data is received in addition to the input sequence data, the conversion unit 12 inputs the input sequence data and the supplementary data into the conversion language model 31 to convert the input sequence data into the output sequence data.

The source generation unit 14 may generate grounding source based on at least one of the robot information of the robot 2, the environmental information of the real space 9, and the user input (the input sequence data and, if necessary, the supplementary data), and output the grounding source to the conversion unit 12. The signal generation unit 15 may generate a control signal based on at least one of the robot information of the robot 2, the environmental information of the real space 9, and the user input (the input sequence data and, if necessary, the supplementary data), and output the control signal to the conversion unit 12. In these cases, the conversion unit 12 further inputs at least one of the grounding source and the control signal into the conversion language model 31 and convert the input sequence data into the output sequence data. The conversion language model 31 may extract at least partial information from the grounding source and convert the input sequence data into the output sequence data such that the extracted information is included in the output sequence data. The language model that extracts information from the grounding source is described, for example, in Patent Literature 3.

The conversion language model 31 processes the input sequence data to the generate output sequence data, and the conversion unit 12 acquires that output sequence data. The output sequence data may include two or more skills. In the present disclosure, output sequence data including two or more skills is also referred to as "skill sequence data." That is, the conversion unit 12 may generate, as the output sequence data, the skill sequence data including two or more skills.

In step S16, the verification unit 16 verifies whether the output sequence data (for example, the skill sequence data) is described according to a predetermined syntax. Output sequence data not conforming to the syntax does not function and thus cannot be used to operate the robot 2. Therefore, this syntax check may be regarded as an example of a process for verifying whether the operation of the robot 2 based on the output sequence data is executable. For example, the verification unit 16 executes a syntax check using a compiler on programming code generated as the output sequence data and verifies whether the programming code is able to be compiled. In a case where the output sequence data is verified to violate the syntax (NO in step S16), the process proceeds to step S17. On the other hand, the output sequence data is verified to conform to the syntax (YES in step S16), the process proceeds to step S18.

In step S17, the setting unit 17 acquires a syntax error and automatically sets the additional input data based on the syntax error. For example, the setting unit 17 acquires an error output from the compiler as the syntax error and automatically sets the additional input data for avoiding the syntax error based on programming constraints.

After step S17, the process returns to step S15. In the repeated step S15, the conversion unit 12 inputs the input data obtained so far (the input sequence data and, if necessary, the supplementary data) and the additional input data into the conversion language model 31 and converts the input sequence data into new output sequence data. In the repeated step S16, the verification unit 16 verifies whether the operation of the robot 2 based on the new output sequence data is executable.

In step S18, the verification unit 16 verifies, under virtual conditions, whether the robot 2 is able to be operated without problems based on the output sequence data (for example, the skill sequence data). This operation check may be regarded as an example of a process for verifying whether the operation of the robot 2 based on the output sequence data is executable.

In one example, the verification unit 16 generates a virtual space that virtually reproduces the real space 9, sets a plurality of situations in the virtual space, and virtually operates the robot 2 based on the output sequence data in each situation. For example, the verification unit 16 sets a plurality of situations while changing at least one of the type, arrangement, and number of workpieces 90. The verification unit 16 executes simulation based on the output sequence data for each of the plurality of situations to verify whether the robot 2 executes the task without interfering with an obstacle other than the workpiece 90.

Alternatively, the verification unit 16 may input the output sequence data and situation data indicating the situation into the verification language model 32 for each of the plurality of situations to cause the verification language model 32 to predict whether the operation of the robot 2 is executable.

As described above, the verification unit 16 may perform operation checks by methods such as the simulation and the verification language model 32. In a case where the operation of the robot 2 is verified not to be executable in at least one situation, that is, in a case where one or more errors are detected (NO in step S18), the process proceeds to step S19. On the other hand, in a case where the operation of the robot 2 is verified to be executable in all the set situations, that is, if no error is detected (YES in step S18), the process proceeds to step S22.

In step S19, the setting unit 17 compares the number of errors with a predetermined threshold. In a case where the number of errors is equal to or greater than the threshold (YES in step S19), the process proceeds to step S20. On the other hand, in a case where the number of errors is less than the threshold (NO in step S19), the process proceeds to step S21.

In step S20, the setting unit 17 presents to the user a retry question, which is a question for receiving additional input data. In one example, the setting unit 17 generates a retry question including error information obtained from the result of verification by the verification unit 16 to inform the user of the reason for requesting the additional input data. The error information indicates that the operation of the robot 2 is not executable. Examples of error information include error messages, error situations, and causes of error. For example, the setting unit 17 may generate a retry question such as "Since the robot interferes with an obstacle in most situations, please specify another position for placing the robot." The setting unit 17 displays the generated retry question on a display device.

After step S20, the process returns to step S12. In the repeated step S12, the setting unit 17 receives user input for the presented retry question and sets the user input as the additional input data. In response to the additional input data being set, the process proceeds to step S13. In the repeated step S13, the setting unit 17 performs the pre-check on the set of the input data obtained so far and the additional input data. That is, the setting unit 17 verifies whether the input sequence data is able to be converted into the output sequence data, referring also to the additional input data. As described above, the process then proceeds to step S14 or step S15.

In step S21, the setting unit 17 identifies, based on the result of verification by the verification unit 16, a cause for which the operation of the robot 2 is not executable as a cause of error, and automatically sets the additional input data based on the cause of error. For example, the setting unit 17 identifies a positional relationship between the robot 2 and a surrounding object such as the workpiece 90 and an obstacle, as a cause of error. Then, the setting unit 17 automatically sets the additional input data for avoiding the cause of error, such as changing the position of the robot 2 or changing the trajectory of movement of the robot 2, based on the robot information, the environmental information, and the like.

After step S21, the process returns to step S15. In the repeated step S15, the conversion unit 12 inputs the set of the input data obtained so far and the additional input data into the conversion language model 31 to convert the input sequence data into new output sequence data. In the repeated step S16, the verification unit 16 verifies whether the operation of the robot 2 based on the new output sequence data is executable.

In step S22, the verification unit 16 presents the output sequence data (for example, the skill sequence data) to the user and causes the user to verify the output sequence data. In a case where the user approves the output sequence data in the user's check (YES in step S22), the process proceeds to step S23. On the other hand, in a case where the user does not approve the output sequence data (NO in step S22), the process returns to step S12. In the repeated step S12, the user may discard the input sequence data so far and re-input the input sequence data from scratch, or may input the additional input sequence data while maintaining the input sequence data so far. As described above, the process then proceeds to step S13.

In step S23, the robot control unit 19 controls the robot 2 based on the output sequence data (for example, the skill sequence data) for which the operation of the robot 2 is verified to be executable. The output sequence data may be the new output sequence data (for example, new skill sequence data) generated in the repeated step S15. The robot control unit 19 controls the robot 2 such that the robot 2 performs the operation represented by the input sequence data.

In a case where the skill sequence data is obtained, the path generation unit 18 generates one or more air-cut paths between the two or more skills included in the skill sequence data. For example, the path generation unit 18 generates one or more air-cut paths to be traversed by the end effector of the robot 2, based on the skill sequence data and sensor data indicating the current situation in the real space 9. The air-cut path may be regarded as an example of the target value for operating the robot 2. The robot control unit 19 controls the robot 2 such that the robot 2 actually performs the operation represented by the input sequence data in the real space 9, based on the skill sequence data and the generated one or more air-cut paths. The robot control unit 19 sequentially determines the manipulated value of the robot 2 along the time axis based on the skill sequence data and the air-cut path, and controls the robot 2 according to the series of manipulated values. The robot 2 operates according to the control. As a result, the operation represented by the input sequence data is realized in the real space 9.

The output sequence data (skill sequence data) may be a behavior tree representing each of the two or more skills as a node. The conversion unit 12 generates, as the output sequence data (skill sequence data), a behavior tree representing each of the two or more skills as a node, and the robot control unit 19 may control the robot 2 based on the behavior tree. In one example, the conversion unit 12 generates programming code implementing the behavior tree as the output sequence data (skill sequence data), and the robot control unit 19 controls the robot 2 based on the programming code.

Since the overall structure of the program is visualized by the behavior tree, the user may readily verify or check the operation of the robot 2 in advance through the behavior tree and ensure the overall stability of the operation of the robot 2. For example, the behavior tree may be used to process a plurality of tasks concurrently or in parallel. In concurrent processing or parallel processing, phenomena called deadlock and resource starvation are considered. The deadlock refers to a phenomenon in which two or more tasks each request resources secured by another task, resulting in none of the tasks being able to proceed. The resource starvation refers to a phenomenon in which a task is never executed because the task cannot acquire resources permanently. By using the behavior tree, it becomes more straightforward to verify or check complex processing such as executing a plurality of tasks concurrently or in parallel while avoiding or reducing the deadlock and resource starvation.

The behavior tree is a technique for representing the operation of an agent such as a robot by a tree structure. The behavior tree includes a root node, a control node, and an execution node. One node is connected to another node by a directed edge. The node at the start point of a directed edge is called a "parent node," and the node at the end point of the directed edge is called a "child node." Each node has at most one parent node and zero or more child nodes. The root node is a node at the top of the behavior tree. The root node has no parent node and typically has one child node. The control node has one parent node and one or more child nodes. The control node, in response to being called, sequentially calls one or more child nodes. The execution node has one parent node and no child nodes. The execution node is also called a "leaf" of the behavior tree. In one example, each of the plurality of skills is associated with an execution node.

In the present disclosure, in a case of focusing on one particular node, the set of one child node of that node and zero or more nodes located below that child node is also referred to as a "subtree." In one example, each subtree corresponds to a task. Since subtrees may be defined at each layer of the behavior tree, the relationship between subtrees may be regarded as a nested structure. Corresponding to such a structure, a task may be realized by a set of a plurality of subtasks. Alternatively, a task may be constituted by a single skill.

The root node calls child nodes at a predetermined cycle interval. This call is also referred to as a "tick." In response to the call by the root node, each node in the subtree connected to the root node is called in a predetermined order, prioritizing from the left based on the tree structure. The call (tick) propagates from the root node to each execution node, thereby executing the entire behavior tree.

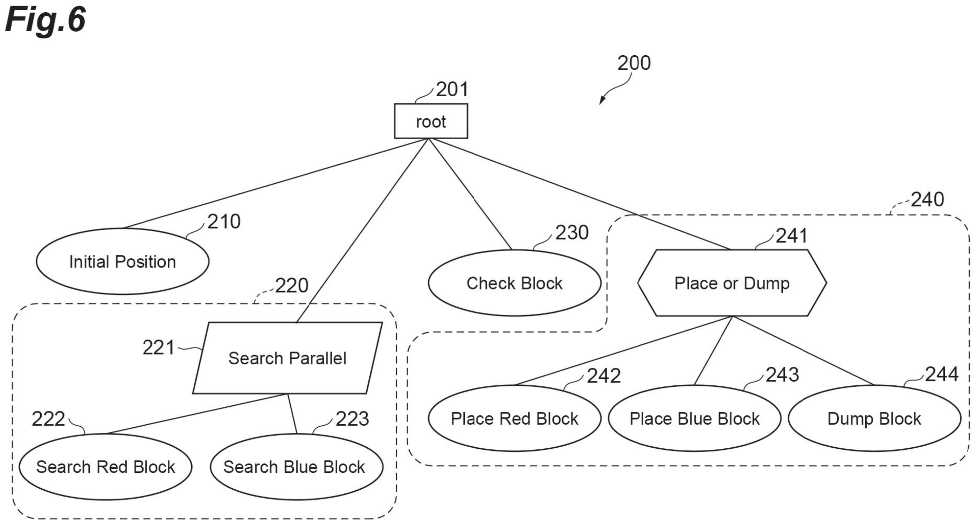

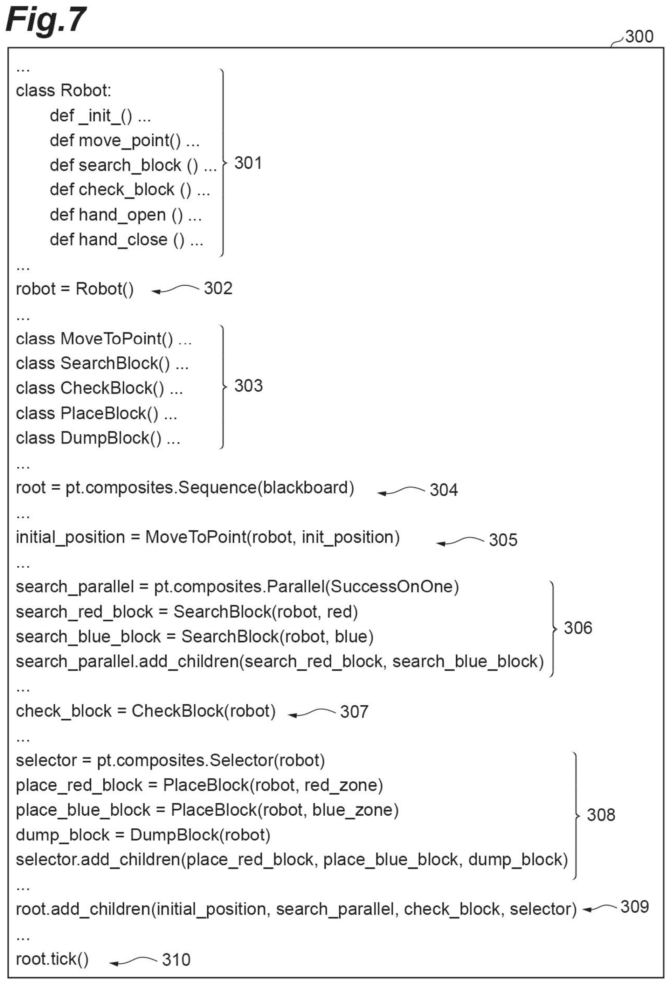

An example of the behavior tree generated as the output sequence data (skill sequence data) will be described with reference to FIG. 6 and FIG. 7. FIG. 6 shows an example behavior tree. FIG. 7 shows an example of programming code implementing the behavior tree shown in FIG. 6.

A behavior tree 200 shown in FIG. 6 includes a root node 201, an execution node 210 indicating a skill (task) of moving to the initial position, a subtree 220 indicating a task of searching for blocks, an execution node 230 indicating a skill (task) of checking the quality of blocks, and a subtree 240 indicating a task of placing blocks. The subtree 220 includes a parallel node 221, which is a type of control node, an execution node 222 indicating a skill of searching for red blocks, and an execution node 223 indicating a skill of searching for blue blocks. The parallel node 221 executes the execution nodes 222 and 223 simultaneously. The subtree 240 includes a selector node 241, which is a type of control node, an execution node 242 indicating a skill of placing red blocks that meet quality requirements, an execution node 243 indicating a skill of placing blue blocks that meet quality requirements, and an execution node 244 indicating a skill of placing blocks that do not meet quality requirements. The selector node 241 executes the execution nodes 242 to 244 in order.

Programming code 300 shown in FIG. 7 implements the behavior tree 200. It is noted that FIG. 7 illustrates the programming code 300 in a partially omitted and simplified format. A code block 301 corresponds to processing for defining individual skills, and a code block 302 indicates instantiation of the robot 2. A code block 303 indicates processing for defining the minimum unit of operation of the robot 2 as a skill. A code block 304 indicates setting of the root node 201. A code block 305 indicates movement to the initial position and corresponds to the execution node 210. A code block 306 indicates searching for blocks and corresponds to the subtree 220. A code block 307 indicates checking the quality of blocks and corresponds to the execution node 230. A code block 308 indicates placing blocks and corresponds to the subtree 240. A code block 309 indicates construction of the behavior tree 200. A code block 310 indicates execution of the behavior tree 200.

The conversion unit 12 may generate a task composed of one or more skills and add a subtree indicating the task to an existing behavior tree to generate a new behavior tree as the skill sequence data. In this case, the reception unit 11 receives the behavior tree as at least part of the input sequence data. The conversion unit 12 processes the behavior tree as the existing behavior tree and generates the new behavior tree. For example, the conversion unit 12 may input the input sequence data into the conversion language model 31 to cause the conversion language model 31 to execute processing for generating a task composed of one or more skills and processing for adding a subtree indicating the task to the existing behavior tree. In this case, the conversion unit 12 acquires the behavior tree output from the conversion language model 31 as the new behavior tree. This processing is also an example of generating the new behavior tree. As another example, the conversion unit 12 inputs the input sequence data into the conversion language model 31 to generate a task composed of one or more skills. Subsequently, the conversion unit 12 automatically adds a subtree indicating the task generated by the conversion language model 31 to the structure of the existing behavior tree to generate the new behavior tree. Alternatively, the conversion unit 12 may add the subtree to a position in the existing behavior tree specified by user input to generate the new behavior tree. As in these examples, the conversion unit 12 may cause the conversion language model 31 to execute addition of a subtree to an existing behavior tree, or may perform the addition without using the conversion language model 31.

### [Modifications]

In the foregoing, the technology of the present disclosure has been described in detail based on various examples. However, the technology of the present disclosure is not limited to the above examples. Various modifications are possible without departing from the gist of the present disclosure.

The reception unit 11 may receive the input sequence data representing an operation of the robot 2 in a format identical or similar to the output sequence data. The conversion unit 12 may input the input sequence data into the conversion language model 31 to convert the input sequence data into output sequence data described in a format identical or similar to the input sequence data. For example, the reception unit 11 receives an operation program described in the format of a certain robot manufacturer as the input sequence data. The conversion unit 12 converts the operation program described in the format of another robot manufacturer as the output sequence data. As another example, the reception unit 11 receives an incomplete operation program as the input sequence data. The conversion unit 12 executes conversion such as bug correction, code adjustment, and code block supplementation on the operation program to generate an operation program capable of operating the robot 2 as the output sequence data.

The program generation system 10 may be provided without providing the verification system 20 and the robot controller 3 in the above example.

The conversion unit may use a neural network including one or more self-attention neural network layers as the conversion language model to convert the input sequence data into the output sequence data. The language model including the self-attention neural network layer is described, for example, in Patent Literature 2. The conversion unit may cause the neural network to perform attention based on a control signal to convert the input sequence data into the output sequence data. The language model that performs attention based on the control signal is described, for example, in Patent Literature 3.

In the above example, the path generation unit 18 generates air-cut paths in real time. As another example, the path generation unit may generate air-cut paths during simulation in the verification unit.

In the above example, the verification unit 16 virtually verifies the operation of the robot by the output sequence data. As another example, the verification unit may actually operate the robot in the real space at a slower speed than usual and verify the operation of the robot by the output sequence data.

The hardware configuration of the system is not limited to an aspect in which each functional module is realized by executing a program. For example, at least part of the above-described functional modules may be configured by a logic circuit specialized for the function, or may be configured by an application specific integrated circuit (ASIC) in which the logic circuit is integrated.

The processing procedure of the method executed by at least one processor is not limited to the above example. For example, some of the steps or processes described above may be omitted, or the steps may be executed in a different order. In addition, any two or more of the above-described steps may be combined, or some of the steps may be modified or deleted. Alternatively, other steps may be executed in addition to the above-described steps.

In a case of comparing the magnitude relationship between two numerical values in a computer system or computer, either of the two criteria "equal to or greater than" and "greater than" may be used, and either of the two criteria "equal to or less than" and "less than" may be used.

### [Appendix]

As is understood from the various examples described above, the present disclosure includes the following aspects.

(appendix 1) A robot system comprising:
a reception unit configured to receive input sequence data representing an operation of a robot placed in a real space;
a conversion unit configured to input the input sequence data into a conversion language model generated by machine learning to convert the input sequence data into output sequence data; and
a robot control unit configured to control the robot to perform the operation, based on the output sequence data.
In this case, the input sequence data representing the operation of the robot is converted into the output sequence data by the conversion language model, and the robot is controlled to perform the operation by the output sequence data. The user may cause the robot to perform a desired operation simply by providing the input sequence data to the robot system. That is, the user may operate the robot with simpler instructions than conventional methods. For example, a user who does not have know-how for automation using robots may readily construct a system using robots. With such a mechanism, the fields in which robots are applied may be expanded. For example, robots may be introduced into areas where automation by robots has not been realized so far.

(appendix 2) The robot system according to appendix 1, further comprising a storage unit configured to store a plurality of skills, wherein each of the plurality of skills corresponds to an element constituting the operation of the robot,
wherein the conversion unit is configured to generate, as the output sequence data, skill sequence data including two or more skills, and
wherein the robot control unit is configured to control the robot based on the skill sequence data.
In this case, the skills, which are elements constituting the operation of the robot, are prepared, and the robot is controlled based on the skill sequence data including the skills. By introducing skills, the quality of the operation of the robot may be ensured.

(appendix 3) The robot system according to appendix 2,
wherein the conversion unit is configured to generate, as the skill sequence data, a behavior tree that represents each of the two or more skills as a node, and
wherein the robot control unit is configured to control the robot based on the behavior tree.
In this case, the robot is controlled based on the behavior tree representing individual skills as nodes. By introducing the behavior tree, the operation of the robot may be readily verified or checked in advance and the overall stability of the operation of the robot may be ensured. In addition, the robot may perform complex operations that may include parallel or concurrent processing of multiple tasks.

(appendix 4) The robot system according to appendix 3,
wherein the conversion unit is configured to:
generate a task composed of one or more skills; and
add a subtree indicating the task to an existing behavior tree to generate the behavior tree as the skill sequence data.
In this case, the subtree indicating the task is added to the existing behavior tree, and the behavior tree as the skill sequence data is generated. With this mechanism, a behavior tree enabling a desired robot operation may be generated by modifying an existing behavior tree.

(appendix 5) The robot system according to any one of appendices 2 to 4, further comprising a path generation unit configured to generate one or more air-cut paths for moving the robot between the two or more skills included in the skill sequence data,
wherein the robot control unit is configured to control the robot based on the skill sequence data and the one or more air-cut paths.
In this case, the air-cut path is generated separately from the skill sequence data, so it is not necessary to prepare air-cut paths as skills in advance. In addition, since the conversion language model does not need to consider the execution order of individual skills, the conversion language model may be simplified, and consequently, the cost of constructing the robot system may be reduced.

(appendix 6) The robot system according to any one of appendices 2 to 5, further comprising a verification unit configured to verify whether the operation of the robot based on the skill sequence data is executable,
wherein the robot control unit is configured to control the robot based on the skill sequence data for which the operation of the robot has been verified to be executable.
In this case, the robot is controlled based on the skill sequence data for which the operation of the robot is verified to be executable. With this mechanism, the success rate of robot control by skill sequence data may be increased.

(appendix 7) The robot system according to appendix 6,
wherein the verification unit is configured to input the skill sequence data into a verification language model to verify whether the operation of the robot based on the skill sequence data is executable, and
wherein the verification language model is generated by another machine learning and different from the conversion language model.
In this case, verification of the operation of the robot based on the skill sequence data is performed by the verification language model. By using the language model, verification may be performed quickly and the resource burden for verification may be reduced. As a result, the time from receiving input sequence data to robot control may be shortened. In addition, by using a language model, errors that may not be verified by simulation may be detected.

(appendix 8) The robot system according to appendix 6 or 7, further comprising a setting unit configured to set additional input data for modifying the skill sequence data in a case where the operation of the robot based on the skill sequence data is verified not to be executable,
wherein the conversion unit is configured to input the input sequence data and the additional input data into the conversion language model to convert the input sequence data into new skill sequence data,
wherein the verification unit is configured to verify whether the operation of the robot based on the new skill sequence data is executable, and
wherein the robot control unit is configured to control the robot based on the new skill sequence data for which the operation of the robot has been verified to be executable.
In this case, in a case where the robot is verified not to be operated by the skill sequence data, the skill sequence data is again generated using the additional input data in addition to the input sequence data. With such a regeneration mechanism, the skill sequence data enabling robot operation may be generated without requiring a user to re-input the input sequence data itself.

(appendix 9) The robot system according to appendix 8,
wherein the setting unit is configured, in a case where it is verified that the operation of the robot based on the skill sequence data is not executable, to:
generate a retry question, which is a question for receiving the additional input data, and present the retry question to a user; and
set a user input to the presented retry question as the additional input data.
In this case, the retry question for receiving the additional input data is generated, and the user input to that question is set as the additional input data. With this mechanism, the user's intention may be directly reflected in the modification of skill sequence data.

(appendix 10) The robot system according to appendix 8,
wherein the setting unit is configured, in a case where the operation of the robot based on the skill sequence data is verified not to be executable, to:
identify, based on a result of the verification by the verification unit, a cause for which the operation of the robot is not executable as a cause of error; and
automatically set the additional input data based on the cause of error.
In this case, since the additional input data is automatically set based on the cause of error, which is a cause for which the operation of the robot is not executable, skill sequence data may be efficiently modified without requiring further user operation.

(appendix 11) The robot system according to any one of appendices 1 to 10,
wherein the conversion unit is configured to further input a control signal into the conversion language model to convert the input sequence data into the output sequence data, and
wherein the control signal is information for controlling the conversion by the conversion language model.
In this case, since the control signal is further input into the conversion language model, the conversion by the conversion language model may be controlled.

(appendix 12) The robot system according to appendix 11, further comprising a signal generation unit configured to generate the control signal based on information regarding the robot,
wherein the conversion unit is configured to input the generated control signal into the conversion language model.
In this case, since the control signal based on the information regarding the robot is input into the conversion language model, the control signal may be more reliably reflected in the operation of the robot.

(appendix 13) The robot system according to any one of appendices 1 to 12,
wherein the reception unit is configured to receive, as the input sequence data, multimodal data including a plurality of types of information, and
wherein the conversion unit is configured to input the multimodal data into the conversion language model to convert the multimodal data into the output sequence data.
In this case, since the multimodal data including the plurality of types of information is used as the input sequence data, the user may cause the robot to perform a desired operation with intuitive and detailed instructions (input sequence data).

(appendix 14) The robot system according to any one of appendices 1 to 13,
wherein the reception unit is configured to verify whether the input sequence data is convertible into the output sequence data, and
wherein the conversion unit is configured to input, into the conversion language model, the input sequence data that has been verified to be convertible into the output sequence data to convert the input sequence data into the output sequence data.
In this case, the input sequence data verified to be convertible into the output sequence data is input into the conversion language model. Therefore, failure in conversion of sequence data by the conversion language model may be avoided, and the output sequence data may be efficiently generated.

(appendix 15) The robot system according to appendix 14,
wherein the reception unit is configured, in a case where the input sequence data is verified not to be convertible into the output sequence data, to further receive supplementary data for supplementing the input sequence data, and
wherein the conversion unit is configured to input the input sequence data and the supplementary data into the conversion language model to convert the input sequence data into the output sequence data. In this case, in a case where the input sequence data is verified not to be converted into the output sequence data, the output sequence data is generated using the supplementary data in addition to the input sequence data. With such a data supplementation mechanism, the output sequence data may be generated without requiring a user to re-input the input sequence data itself.

(appendix 16) The robot system according to appendix 15,
wherein the reception unit is configured, in a case where the input sequence data is verified not to be convertible into the output sequence data, to:
generate a supplementary question, which is a question for receiving the supplementary data, and present the supplementary question to a user; and
receive a user input to the presented supplementary question as the supplementary data.
In this case, the supplementary question for receiving the supplementary data is presented to the user, and the user input to the question is received as the supplementary data. By presenting the supplementary question, the supplementary data for enabling conversion into the output sequence data may be more reliably obtained from the user.

(appendix 17) The robot system according to appendix 16,
wherein the reception unit is configured to:
identify a type of the operation of the robot based on the input sequence data; and
generate the supplementary question based on the type of the operation.
In this case, since the supplementary question is generated based on the type of the operation of the robot, a supplementary question that is highly likely to obtain supplementary data enabling conversion into output sequence data may be presented to the user.

(appendix 18) The robot system according to any one of appendices 1 to 17,
wherein the reception unit is configured to receive the input sequence data representing the operation of the robot in a format that is identical or similar to a format of the output sequence data, and
wherein the conversion unit is configured to input the input sequence data into the conversion language model to convert the input sequence data into the output sequence data described in a format that is identical or similar to a format of the input sequence data.
In this case, the output sequence data described in the format identical or similar to the input sequence data is obtained. With this mechanism, a user familiar with an existing system may transfer their know-how to another system. Therefore, the user may reduce the effort required to instruct the robot or the burden of learning the instruction format.

(appendix 19) A robot control method executable by a robot system comprising at least one processor, the method comprising:
receiving input sequence data representing an operation of a robot placed in a real space;
inputting the input sequence data into a conversion language model generated by machine learning to convert the input sequence data into output sequence data; and
controlling the robot to perform the operation, based on the output sequence data.
In this case, the input sequence data representing the operation of the robot is converted into the output sequence data by the conversion language model, and the robot is controlled to perform the operation by the output sequence data. The user may cause the robot to perform a desired operation simply by providing the input sequence data to the robot system. That is, the user may operate the robot with simpler instructions than conventional methods. For example, a user who does not have know-how for automation using robots may readily construct a system using robots. With such a mechanism, the fields in which robots are applied may be expanded. For example, robots may be introduced into areas where automation by robots has not been realized so far.

(appendix 20) A robot control program for causing a computer to execute:
receiving input sequence data representing an operation of a robot placed in a real space;
inputting the input sequence data into a conversion language model generated by machine learning to convert the input sequence data into output sequence data; and
controlling the robot to perform the operation, based on the output sequence data.
In this case, the input sequence data representing the operation of the robot is converted into the output sequence data by the conversion language model, and the robot is controlled to perform the operation by the output sequence data. The user may cause the robot to perform a desired operation simply by providing the input sequence data to the robot system. That is, the user may operate the robot with simpler instructions than conventional methods. For example, a user who does not have know-how for automation using robots may readily construct a system using robots. With such a mechanism, the fields in which robots are applied may be expanded. For example, robots may be introduced into areas where automation by robots has not been realized so far.

(appendix 21) A program generation system comprising:
a reception unit configured to receive input sequence data representing an operation of a robot placed in a real space; and
a conversion unit configured to input the input sequence data into a conversion language model generated by machine learning to convert the input sequence data into output sequence data, which is an operation program for causing the robot to perform the operation.
In this case, the input sequence data representing the operation of the robot is converted into the output sequence data by the conversion language model. This output sequence data is an operation program for causing the robot to perform the operation. By using the output sequence data, the user may cause the robot to perform a desired operation simply by providing the input sequence data. That is, the user may operate the robot with simpler instructions than conventional methods. With such a mechanism, the fields in which robots are applied may be expanded.

In addition to the above appendices, the present disclosure further includes the following aspects.

The robot system may further include a skill generation unit that generates a skill and stores the skill in the storage unit based on user input. In this case, the user may set the skill to be included in the sequence data for operating the robot. Therefore, the user may control the operation of the robot and manage the quality of the operation.

The robot system may further include a recognition unit that recognizes the user's speech and generates input information. In this case, various operations may be performed by the robot by speech. Compared to conventional systems, the cost of system construction may be reduced, and a more flexible system may be constructed more readily.

In the robot system, the conversion unit may convert the input sequence data into the output sequence data by a neural network including one or more self-attention neural network layers as a language model. In this case, a flexible system may be constructed while reducing costs. In addition, various variations of input sequence data may be converted into executable output sequence data with higher probability. As a result, the fields in which robots are applied may be expanded.

In the robot system, the conversion unit may cause the neural network to perform attention based on a control signal for controlling conversion by the language model, to convert the input sequence data into the output sequence data. In this case, since the conversion by the conversion unit may be controlled by the control signal, the output sequence data reflecting the user's intention and individual circumstances in the system configuration may be generated. As a result, the probability of generating the output sequence data capable of controlling the robot may be increased.

The robot system may further comprise a signal generation unit that generates (the generation includes selecting from pre-prepared signals) a control signal based on at least one of information regarding the robot and user input. The conversion unit may cause the neural network to perform attention based on the generated control signal, to convert the input sequence data into the output sequence data. In this case, the information regarding the robot (this includes information about the robot itself, and information about the situation of robot, surrounding environment, and workpiece) or the user's intention may be reflected in the operation of the robot via the control signal.

In the robot system, the conversion unit may convert the input sequence data into the output sequence data such that the neural network extracts information to be included in the output sequence from the grounding source as a candidate for inclusion in the output sequence. In this case, the information to be included in the output sequence may be limited to the grounding source (or information in the grounding source may be made dominant). Therefore, by appropriately setting the grounding source, the quality of operation by the robot may be improved.

The robot system may further include a storage unit that stores a plurality of skills each representing an operation of the robot and a source generation unit that generates the grounding source based on the stored plurality of skills. The conversion unit may convert, by a neural network, the input sequence data into the skill sequence data including a plurality of skills as the output sequence data, such that at least one or more of the plurality of skills included in the grounding source are included, and the control unit may control the robot based on the skill sequence data. In this case, since the operation of the robot itself is prepared as a skill, the quality of the operation of the robot may be ensured. In addition, by changing the grounding source, the system may be applied to various uses or types of robots, and the cost of system construction may be reduced.

In the robot system, the source generation unit may narrow down a plurality of skills stored in the storage unit to two or more skills in accordance with the user input, based on at least one of the information regarding the robot and the user input, and generate the grounding source based on the narrowed two or more skills. In this case, the grounding source of a plurality of skills narrowed down by the information regarding the robot (this includes information about the robot itself, and information about the situation of robot, surrounding environment, and workpiece) or the user's intention are generated. By performing conversion into the skill sequence data using the grounding source, the output sequence data for more appropriately operating the robot may be generated, and the fields in which robots are applied may be expanded.

The robot system may further include a skill generation unit that generates a skill based on user input and stores the skill in a storage unit. In this case, the user may set the skill to be included in the sequence data for operating the robot. Therefore, the user may control the operation of the robot and manage the quality of the operation.

### Reference Signs List

1: robot system, 2: robot, 3: robot controller, 4: sensor, 9: real space, 10: program generation system, 11: reception unit, 12: conversion unit, 13: storage unit, 14: source generation unit, 15: signal generation unit, 16: verification unit, 17: setting unit, 18: path generation unit, 19: robot control unit, 20: verification system, 31: conversion language model, 32: verification language model, 200: behavior tree, 300: programming code.

## Claims

1. A robot system comprising:
a reception unit configured to receive input sequence data representing an operation of a robot placed in a real space;
a conversion unit configured to input the input sequence data into a conversion language model generated by machine learning to convert the input sequence data into output sequence data; and
a robot control unit configured to control the robot to perform the operation, based on the output sequence data.

2. The robot system according to claim 1, further comprising a storage unit configured to store a plurality of skills, wherein each of the plurality of skills corresponds to an element constituting the operation of the robot,
wherein the conversion unit is configured to generate, as the output sequence data, skill sequence data including two or more skills, and
wherein the robot control unit is configured to control the robot based on the skill sequence data.

3. The robot system according to claim 2,
wherein the conversion unit is configured to generate, as the skill sequence data, a behavior tree that represents each of the two or more skills as a node, and
wherein the robot control unit is configured to control the robot based on the behavior tree.

4. The robot system according to claim 3,
wherein the conversion unit is configured to:
generate a task composed of one or more skills; and
add a subtree indicating the task to an existing behavior tree to generate the behavior tree as the skill sequence data.

5. The robot system according to claim 2, further comprising a path generation unit configured to generate one or more air-cut paths for moving the robot between the two or more skills included in the skill sequence data,
wherein the robot control unit is configured to control the robot based on the skill sequence data and the one or more air-cut paths.

6. The robot system according to any one of claims 2 to 5, further comprising a verification unit configured to verify whether the operation of the robot based on the skill sequence data is executable,
wherein the robot control unit is configured to control the robot based on the skill sequence data for which the operation of the robot has been verified to be executable.

7. The robot system according to claim 6,
wherein the verification unit is configured to input the skill sequence data into a verification language model to verify whether the operation of the robot based on the skill sequence data is executable, and
wherein the verification language model is generated by another machine learning and different from the conversion language model.

8. The robot system according to claim 6, further comprising a setting unit configured to set additional input data for modifying the skill sequence data in a case where the operation of the robot based on the skill sequence data is verified not to be executable,
wherein the conversion unit is configured to input the input sequence data and the additional input data into the conversion language model to convert the input sequence data into new skill sequence data,
wherein the verification unit is configured to verify whether the operation of the robot based on the new skill sequence data is executable, and
wherein the robot control unit is configured to control the robot based on the new skill sequence data for which the operation of the robot has been verified to be executable.

9. The robot system according to claim 8,
wherein the setting unit is configured, in a case where the operation of the robot based on the skill sequence data is verified not to be executable, to:
generate a retry question, which is a question for receiving the additional input data, and present the retry question to a user; and
set a user input to the presented retry question as the additional input data.

10. The robot system according to claim 8,
wherein the setting unit is configured, in a case where the operation of the robot based on the skill sequence data is verified not to be executable, to:
identify, based on a result of the verification by the verification unit, a cause for which the operation of the robot is not executable as a cause of error; and
automatically set the additional input data based on the cause of error.

11. The robot system according to claim 1,
wherein the conversion unit is configured to further input a control signal into the conversion language model to convert the input sequence data into the output sequence data, and
wherein the control signal is information for controlling the conversion by the conversion language model.

12. The robot system according to claim 11, further comprising a signal generation unit configured to generate the control signal based on information regarding the robot,
wherein the conversion unit is configured to input the generated control signal into the conversion language model.

13. The robot system according to claim 1,
wherein the reception unit is configured to receive, as the input sequence data, multimodal data including a plurality of types of information, and
wherein the conversion unit is configured to input the multimodal data into the conversion language model to convert the multimodal data into the output sequence data.

14. The robot system according to claim 1,
wherein the reception unit is configured to verify whether the input sequence data is convertible into the output sequence data, and
wherein the conversion unit is configured to input, into the conversion language model, the input sequence data that has been verified to be convertible into the output sequence data to convert the input sequence data into the output sequence data.

15. The robot system according to claim 14,
wherein the reception unit is configured, in a case where the input sequence data is verified not to be convertible into the output sequence data, to further receive supplementary data for supplementing the input sequence data, and
wherein the conversion unit is configured to input the input sequence data and the supplementary data into the conversion language model to convert the input sequence data into the output sequence data.

16. The robot system according to claim 15,
wherein the reception unit is configured, in a case where the input sequence data is verified not to be convertible into the output sequence data, to:
generate a supplementary question, which is a question for receiving the supplementary data, and present the supplementary question to a user; and
receive a user input to the presented supplementary question as the supplementary data.

17. The robot system according to claim 16,
wherein the reception unit is configured to:
identify a type of the operation of the robot based on the input sequence data; and
generate the supplementary question based on the type of the operation.

18. The robot system according to claim 1,
wherein the reception unit is configured to receive the input sequence data representing the operation of the robot in a format that is identical or similar to a format of the output sequence data, and
wherein the conversion unit is configured to input the input sequence data into the conversion language model to convert the input sequence data into the output sequence data described in a format that is identical or similar to a format of the input sequence data.

19. A robot control method executable by a robot system comprising at least one processor, the method comprising:
receiving input sequence data representing an operation of a robot placed in a real space;
inputting the input sequence data into a conversion language model generated by machine learning to convert the input sequence data into output sequence data; and
controlling the robot to perform the operation, based on the output sequence data.

20. A robot control program for causing a computer to execute:
receiving input sequence data representing an operation of a robot placed in a real space;
inputting the input sequence data into a conversion language model generated by machine learning to convert the input sequence data into output sequence data; and
controlling the robot to perform the operation, based on the output sequence data.

21. A program generation system comprising:
a reception unit configured to receive input sequence data representing an operation of a robot placed in a real space; and
a conversion unit configured to input the input sequence data into a conversion language model generated by machine learning to convert the input sequence data into output sequence data, which is an operation program for causing the robot to perform the operation.
